# EUROPEAN PATENT APPLICATION

(11) **EP 4 807 844 A1**
(43) Date of publication of application: **16.09.2026**
(21) Application number: 26161893.8
(22) Date of filing: 03.03.2026
(51) Int. Cl.: H01M 10/0562, H01M 10/0565, H01M 10/0585, H01M 50/169, H01M 50/204, H01M 50/242, H01M 50/291

(54) **BATTERY MODULE AND SOLID-STATE BATTERY MODULE**

(30) Priority: 11.03.2025 JP 2025038795; 22.09.2025 JP 2025157148
(71) Applicant: Toyota Jidosha Kabushiki Kaisha, Toyota-shi, Aichi-ken 471-8571 (JP)
(72) Inventor: MURAMATSU, Daisuke, Toyota-shi, Aichi-ken 471-8571 (JP)
(74) Representative: Winter, Brandl - Partnerschaft mbB

(57) **Abstract**

A battery module of a first aspect includes: a plurality of battery cells (12) that are stacked in one direction, each of the battery cells (12) including a casing (22) that houses an electrode body (30); and plate-like members (14) that are disposed adjacent to at least one side of each of the battery cells (12) in a stacking direction of the battery cells (12), and that are confined together with the battery cells (12), wherein: a surface on a plate-like member (14) side of each casing (22) includes a confined region (AR1), in which the surface contacts the plate-like members (14), and non-confined regions (AR2), in which the surface does not contact the plate-like members (14), and reinforcement portions (22A, 62A) are provided in the non-confined regions (AR2).

## Description

### BACKGROUND

### Technical Field

This disclosure relates to a battery module and a solid-state battery module.

### Related Art

Japanese Patent Application Laid-open (JP-A) No. 2016-197537 discloses a battery module including a plurality of battery cells stacked in a predetermined direction. Furthermore, in the battery module disclosed in JP-A No. 2016-197537, inter-battery members (plate-like members) are disposed between adjacent battery cells.

However, in a structure where a confining force is input from plate-like members such as the inter-battery members to just regions of parts of the battery cells, when the internal pressure of the battery cells rises, the battery cells may expand in non-confined regions in which the plate-like members do not contact the battery cells.

### SUMMARY

The present disclosure provides a battery module and a solid-state battery module that can appropriately confine battery cells and inhibit expansion of the battery cells when their internal pressure rises.

A battery module of a first aspect includes: a plurality of battery cells that are stacked in one direction, each of the battery cells including a casing that houses an electrode body; and plate-like members that are disposed adjacent to at least one side of each of the battery cells in a stacking direction of the battery cells, and that are confined together with the battery cells, wherein: a surface on a plate-like member side of each casing includes a confined region, in which the surface contacts the plate-like members, and non-confined regions, in which the surface does not contact the plate-like members, and reinforcement portions are provided in the non-confined regions.

In the battery module of the first aspect, the battery cells are stacked in the one direction, and each of the battery cells includes the casing that houses the electrode body. That is, the plurality of battery cells are provided in the one direction. Furthermore, the plate-like members are provided adjacent to the battery cells on at least one side of each of the battery cells in the stacking direction thereof. Here, the plate-like members are confined together with the battery cells.

Furthermore, the surface on the plate-like member side of the casing is configured to include the confined region, in which the surface contacts the plate-like member, and the non-confined region, in which the surface does not contact the plate-like member, and the reinforcement portions are provided in the non-confined regions. In this way, the non-confined regions are reinforced by the reinforcement portions, so the non-confined regions can be inhibited from expanding when the internal pressure of the battery cell rises.

A battery module of a second aspect is the first aspect, wherein the reinforcement portions include at least one of raised portions and recessed portions provided in the non-confined regions of the casing.

In the battery module of the second aspect, the reinforcement portions are configured to include at least one of raised portions and recessed portions provided in the non-confined regions. Because of this, the non-confined regions can be reinforced by a simple structure.

A battery module of a third aspect is the second aspect, wherein the reinforcement portions include recessed portions that are recessed toward an inner side of the casing, and the recessed portions are provided at positions at which the recessed portions do not overlap with the electrode body as viewed from the stacking direction.

In the battery module of the third aspect, the reinforcement portions are configured to include the recessed portions that are recessed inward of the casing, so the reinforcement portions can be inhibited from interfering with parts outside the battery cell. Furthermore, the recessed portions are provided in positions in which they do not overlap the electrode body as viewed from the stacking direction, so dead space in which the electrode body is not present can be utilized to reinforce the non-confined regions.

A battery module of a fourth aspect is the second aspect, wherein the reinforcement portions include raised portions that project outward from the casing, and a maximum projection amount of the raised portions is less than a thickness of each of the plate-like members.

In the battery module of the fourth aspect, the reinforcement portions are configured to include the raised portions that project outward of the casing, so the reinforcement portions can be inhibited from interfering with parts inside the battery cell. Furthermore, the maximum projection amount of the raised portions is smaller than the thickness of the plate-like member, so the raised portions can be inhibited from interfering with adjacent battery cells.

A battery module of a fifth aspect is the second aspect, wherein the casing includes a case body having an open portion, and a lid that is welded to the case body and that closes off the open portion of the case body, and the raised portions or the recessed portions extend in a direction intersecting a welded portion at which the case body and the lid are welded together.

In the battery module of the fifth aspect, the raised portions or the recessed portions extend in a direction intersecting the welded portion at which the case body and the lid are welded together. Because of this, the welded portion, which is relatively structurally weak, can be effectively inhibited from expanding.

A battery module of a sixth aspect is the fifth aspect, wherein the projection amount of the raised portions or the recessed portions increases the closer the raised portions or the recessed portions become to the welded portion.

In the battery module of the sixth aspect, by increasing the projection amount of the raised portions or the recessed portions the closer the raised portions or the recessed portions become to the welded portions, expansion in the neighborhood of the welded portion can be effectively inhibited. Furthermore, by relatively decreasing the projection amount of the raised portions or the recessed portions in positions away from the welded portion, interference with peripheral parts can be inhibited.

A battery module of a seventh aspect is the first aspect, wherein the reinforcement portions are provided at a center portion of the casing in a direction orthogonal to the stacking direction.

In the battery module of the seventh aspect, the center portion of the casing in the direction orthogonal to the stacking direction tends to expand the most, so reinforcing this portion can effectively inhibit expansion of the casing.

A battery module of an eighth aspect is the first aspect, wherein the non-confined regions are provided at both sides of the confined region, and the reinforcement portions are provided at the non-confined regions located at both sides.

In the battery module of the eighth aspect, expansion of the non-confined regions on both sides can be inhibited.

A battery module of a ninth aspect is the eighth aspect, wherein the reinforcement portions are provided at corresponding positions in one non-confined region and another non-confined region.

In the battery module of the ninth aspect, the one non-confined region and the other non-confined region can be evenly reinforced.

A battery module of a tenth aspect is the eighth aspect, wherein the casing includes a case body having an open portion, and a lid that is welded to the case body and that closes off the open portion of the case body, and the reinforcement portions are provided in a greater number in the non-confined region located close to the lid.

In the battery module of the tenth aspect, by increasing the number of the reinforcement portions in the non-confined region located close to the lid, the non-confined region located close to the lid, which is weaker, can be effectively reinforced.

A battery module of an eleventh aspect is the first aspect, wherein the plate-like members are disposed adjacent to only one surface of each casing, and the reinforcement portions are provided at only surfaces adjacent to the plate-like members.

In the battery module of the eleventh aspect, by providing the reinforcement portions on just the surfaces of the casings adjacent to the plate-like members, expansion of the surfaces not provided with the reinforcement portions is promoted and expansion of the non-confined regions can be inhibited.

A battery module of a twelfth aspect is the first aspect, wherein the plate-like members are disposed at positions at which the plate-like members entirely overlap with the electrode bodies as viewed from the stacking direction.

In the battery module of the twelfth aspect, the entireties of the plate-like members receive a reaction force from the electrode bodies, so the casings can be inhibited by being deformed by the confining force input from the plate-like members.

A battery module of a thirteenth aspect is the first aspect, wherein confining members that apply a confining force to the battery cells and the plate-like members are provided at both sides of a stack in which the plurality of battery cells are stacked, and a number of the reinforcement portions is greater at surfaces of casings located closer to the confining members than at surfaces of casings located farther away from the confining members.

In the battery module of the thirteenth aspect, the surfaces of the casings located closer to the confining members receive a greater confining force, so by increasing the number of the reinforcement portions, the casings can be appropriately reinforced in accordance with loads input to the casings.

A battery module of a fourteenth aspect includes: a plurality of battery cells that are stacked in one direction, each of the battery cells including a casing, which houses an electrode body, and a solid electrolyte as an electrolyte; and plate-like members that are disposed adjacent to at least one side of each of the battery cells in a stacking direction of the battery cells, and that are confined together with the battery cells, wherein: a surface on a plate-like member side of each casing includes a confined region, in which the surface contacts the plate-like members, and non-confined regions, in which the surface does not contact the plate-like members, and reinforcement portions are provided in the non-confined regions.

As described above, according to the battery module and the solid-state battery module pertaining to the disclosure, battery cells can be appropriately confined and expansion of the battery cells when their internal pressure rises can be inhibited.

### BRIEF DESCRIPTION OF THE DRAWINGS

An exemplary embodiment of the present disclosure will be described in detail based on the following figures, wherein:
FIG. 1 is a front view showing main parts of a battery module pertaining to the embodiment;
FIG. 2 is a perspective view showing main parts of the battery module pertaining to the embodiment;
FIG. 3 is an enlarged cross-sectional view showing a cross section along line 3-3 of FIG. 1;
FIG. 4 is an enlarged cross-sectional view showing a cross section along line 4-4 of FIG. 3;
FIG. 5 is an enlarged cross-sectional view corresponding to FIG. 4 and shows main parts of a battery cell in a first example modification;
FIG. 6 is an enlarged cross-sectional view corresponding to FIG. 4 and shows main parts of a battery cell in a second example modification;
FIG. 7 is a perspective view corresponding to FIG. 2 and shows main parts of a battery module pertaining to a third example modification; and
FIG. 8 is an enlarged front view showing main parts of a battery module pertaining to a fourth example modification.

### DETAILED DESCRIPTION

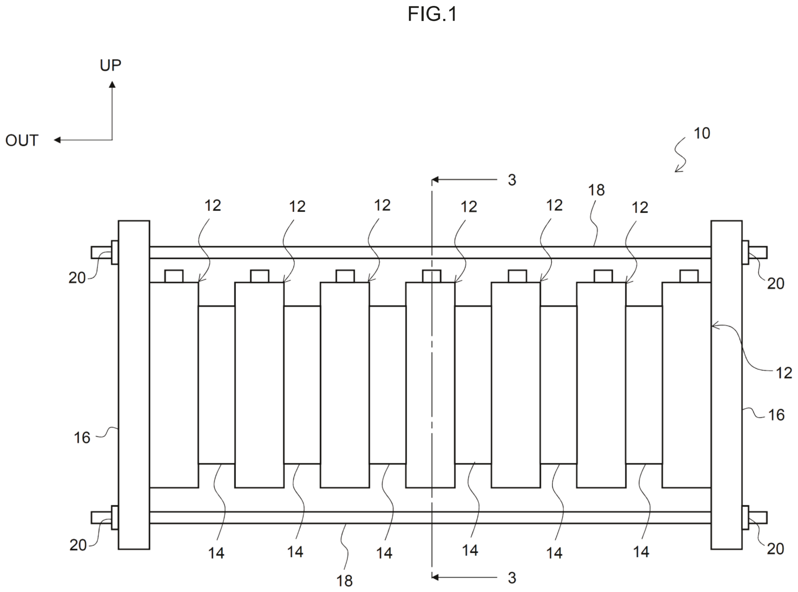

FIG. 1 is a front view showing main parts of a battery module 10 pertaining to an embodiment. As shown in FIG. 1, the battery module 10 is configured to include a plurality of battery cells 12 stacked along a predetermined direction and a plurality of plate-like members 14 interposed between adjacent battery cells 12. It will be noted that the battery module 10 of this embodiment is a solid-state battery module including a solid electrolyte as an electrolyte.

For example, the battery module 10 of this embodiment configures a battery pack installed under the floor of a battery electric vehicle (BEV), and the battery pack includes a plurality of the battery modules 10. It will be noted that in addition to a BEV the battery module 10 may also be applied to, for example, a hybrid electric vehicle (HEV) or a plug-in hybrid electric vehicle (PHEV) in which an engine is installed.

Furthermore, in the drawings, arrow OUT indicates an outward direction in the width direction of the battery module 10, arrow UP indicates an upward direction of the battery module 10, and arrow FR indicates a forward direction of the battery module 10. In the following description, when the directions of front, rear, left, right, up, and down are used, unless otherwise noted these will be understood to mean the front/rear, left/right, and up/down directions of the battery module 10. However, the front, rear, left, right, up, and down directions of the battery module 10 need not match the front, rear, left, right, up, and down directions of the vehicle.

In this embodiment, as an example, the battery module 10 includes seven battery cells 12 stacked in the width direction. Furthermore, confining members 16 are provided on both width direction sides of a stack in which the seven battery cells 12 are stacked. The pair of confining members 16 are each formed substantially in the shape of a rectangular plate and are formed longer in the up and down direction than the battery cells 12 and the plate-like members 14.

One confining member 16 contacts the battery cell 12 located on one width direction end side of the battery module 10, and the other confining member 16 contacts the battery cell 12 located on the other width direction side of the battery module 10. For this reason, among the battery cells 12 configuring the battery module 10, the battery cells 12 positioned on both width direction sides have a plate-like member 14 disposed on one side only, and the remaining battery cells 12 have plate-like members 14 disposed on both width direction sides. For this reason, the battery module 10 has a structure where six plate-like members 14 are disposed between the seven battery cells 12.

Rods 18 penetrate the upper end portions and the lower end portions of the pair of confining members 16. The rods 18 are rod-shaped members extending in the width direction, and the upper end portions and the lower end portions of the confining members 16 are each penetrated by two rods 18 spaced apart from each other in the front and rear direction. For this reason, the rods 18 penetrate the four corner portions of each of the confining members 16 that are substantially shaped like rectangular plates.

Threaded grooves (not shown in the drawings) are formed in both end portions of each of the rods 18, and nuts 20 are screwed onto the rods 18 from the width direction outer sides of the confining members 16. The nuts 20 are tightened to reduce the distance between the pair of confining members 16 and apply a confining force to the battery cells 12 and the plate-like members 14. It will be noted that another structure may be employed as long as it is a structure that can apply a confining force to the battery cells 12 and the plate-like members 14. For example, one confining member 16 may be rigidly coupled to the rods 18 and just the other confining member 16 may be configured to be slidable.

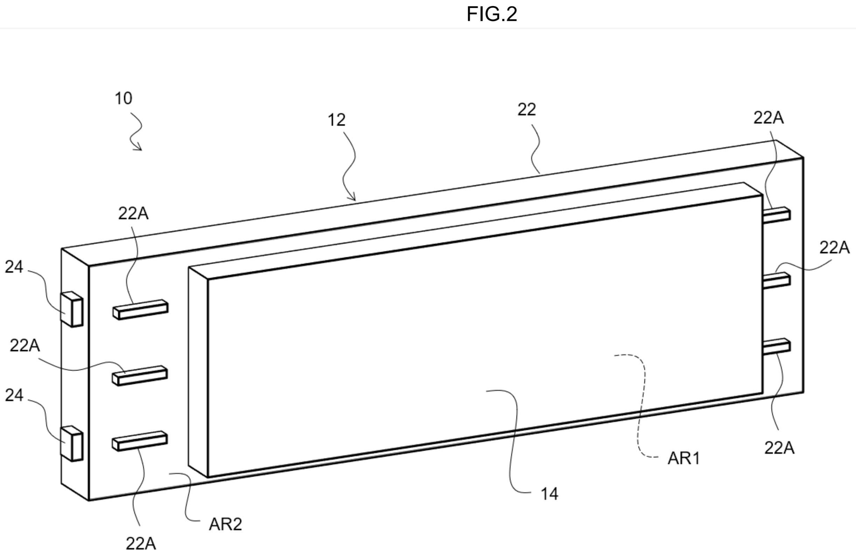

FIG. 2 is a perspective view showing main parts of the battery module 10 pertaining to the embodiment. As shown in FIG. 2, each of the battery cells 12 configuring the battery module 10 is formed substantially in the shape of a rectangle having short sides and long sides as viewed from the stacking direction. In this embodiment, as an example, since the long sides coincide with the up and down direction, each of the battery cells 12 is formed substantially in the shape of a rectangle that is long up and down as viewed from the stacking direction.

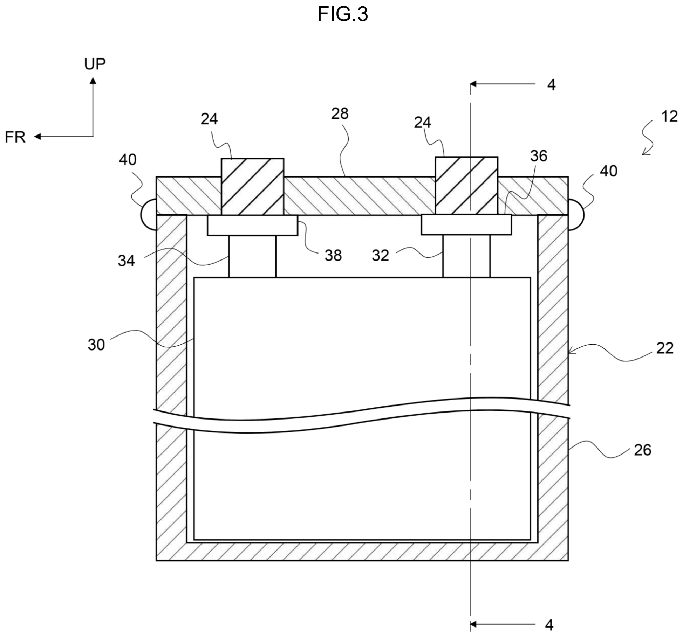

Furthermore, each of the battery cells 12 includes a substantially box-like casing 22, and two external terminals 24 are provided in the upper end portion of the casing 22. The external terminals 24 are electrically connected to an electrode body 30 (see FIG. 3) housed inside the casing 22. The casing 22 is formed by a thin-walled metal substrate. As the metal substrate, a conventionally known and used metal substrate including aluminum or a metal substrate including stainless steel can be used. The thickness of the metal substrate is preferably 1 mm or less, more preferably 0.2 mm to 0.5 mm, and even more preferably 0.3 mm to 0.5 mm.

It will be noted that although in this embodiment a structure where two external terminals 24 are provided on one end side of each of the battery cells 12 is described as an example, the structure of the battery cells 12 is not limited to this. For example, a structure where the external terminals are provided on one end portion and the other end portion of each of the battery cells 12 may also be employed. Furthermore, a structure where the external terminals are provided on the long sides of the casing 22 may also be employed.

The plate-like members 14 are each formed substantially in the shape of a rectangle having short sides and long sides as viewed from the stacking direction, and in this embodiment, as an example, the plate-like members 14 formed of a thermal insulation material. For example, the plate-like members 14 have a thermal conductivity equal to or less than 0.03 W/(m·K) and are configured to include silica aerogel composed primarily of silica. Furthermore, from the standpoint of thermal insulation performance, silica aerogel configured by a silicon dioxide frame and 90% to 98% air is preferred, and a material having excellent flame retardance is more preferred. The plate-like members 14 are not limited to this and may be elastic bodies or resin, for example.

Here, the plate-like members 14 are disposed adjacent to at least one side of each of the battery cells 12 in the stacking direction thereof and are confined together with the battery cells 12. Furthermore, the plate-like members 14 are interposed between the battery cells 12. Furthermore, the plate-like members 14 are smaller in shape than the casing 22 of each of the battery cells 12, and the plate-like members 14 entirely overlap the battery cells 12 as viewed from the stacking direction. Furthermore, the long sides of the plate-like members 14 are disposed parallel to the long sides of the casing 22 of each of the battery cells 12, and the short sides of the plate-like members 14 are disposed parallel to the short sides of the casing 22 of each of the battery cells 12.

The surface on the plate-like member 14 side of the casing 22 is configured to include a confined region AR1, in which the surface contacts the plate-like member 14, and non-confined regions AR2, in which the surface does not contact the plate-like member 14. In the confined region AR1, a confining force is applied in the stacking direction from the plate-like member 14 to the casing 22.

The non-confined regions AR2 are regions of the surface of the casing 22 opposing the plate-like member 14 that do not contact the plate-like member 14, and in this embodiment, as an example, the area of the confined region AR1 is set to be six times or more the area of the non-confined regions AR2.

Furthermore, in this embodiment, as an example, the length of the confined region AR1 along its short sides is set equal to or greater than 95% of the length of the casing 22 along its short sides. For this reason, the length to which the casing 22 projects in the front and rear direction relative to the plate-like member 14 is equal to or less than 5% of the length of the casing 22 in the front and rear direction.

It will be noted that although in this embodiment the plate-like members 14 are formed of a thermal insulation material, the plate-like members 14 are not limited to this. For example, members whose thermal conductivity is greater than 0.03 W/(m·K) may also be used. In this case also, expansion of the battery cells 12 caused by, for example, gas generated inside the battery cells 12 can be effectively inhibited by interposing the plate-like members 14 between the battery cells 12.

Here, raised portions 22A serving as reinforcement portions are provided in the non-confined regions AR2 of the casing 22. The raised portions 22A are provided in a plural number in the non-confined regions AR2 and project outward of the casing 22.

In this embodiment, as an example, the non-confined regions AR2 are provided on both the upper and lower sides of the confined region AR1, and three raised portions 22A are provided in each of the non-confined regions AR2. Furthermore, the raised portions 22A extend in the up and down direction and are formed in substantially regular intervals along the front and rear direction.

The raised portions 22A in the middle of each of the upper and lower groups of three raised portions 22A are positioned in the center portion of the casing 22 in the front and rear direction (a direction orthogonal to the stacking direction). That is, the raised portions 22A in the middle of each of the upper and lower groups of three raised portions 22A are positioned in the middle of the two external terminals 24. Furthermore, the upper three raised portions 22A and the lower three raised portions 22A are provided in corresponding positions. For this reason, the lower raised portions 22A are positioned on extension lines of the upper raised portions 22A in the extension direction thereof.

FIG. 3 is an enlarged cross-sectional view showing a cross section along line 3-3 of FIG. 1. As shown in FIG. 3, the casing 22 is configured to include a case body 26 having an open portion and a lid 28 that closes off the open portion of the case body 26. The case body 26 of this embodiment is, as an example, formed in the shape of a bottomed rectangular tube and opens upward.

The lid 28 is formed thicker than the case body 26. In other words, the case body 26 is formed thinner than the lid 28. Furthermore, the lid 28 is joined to the case body 26 by welding, and a welded portion 40 is provided at the boundary between the case body 26 and the lid 28. Furthermore, the two external terminals 24 are inserted through the lid 28.

An electrode body 30 is housed inside the case body 26 configuring the battery cell 12. The electrode body 30 is configured by laminating a positive electrode current collector, a positive electrode active material, a solid electrolyte, a negative electrode active material, and a negative electrode current collector. It will be noted that although in this embodiment a laminated electrode body is used for the electrode body 30, a coiled electrode body may be used instead of the laminated electrode body.

The positive electrode current collector and the negative electrode current collector are formed of metal foils, and examples of the metal foils include aluminum foil, copper foil, nickel foil, titanium foil, and stainless steel foil. Furthermore, a coating layer may be formed on the surfaces of the current collectors, and the coating layers may be formed by a known method such as plating or spray coating, for example. It will be noted that the positive electrode current collector is preferably an aluminum foil and the negative electrode current collector is preferably a copper foil.

The positive electrode active material is not particularly limited and conventionally known materials can be used as appropriate. Examples of the positive electrode active material include LiCoO₂, LiNiO₂, LiMnO₂, LiMn₂O₄, Li(NiCoMn)O₂, Li(NiCoAl)O₂, and LiFePO₄. It will be noted that the positive electrode active material particles may be high-nickel (a positive electrode active material with a high percentage of Ni), a Li-Ni-Co-Mn composite oxide, or a ternary positive electrode active material.

Examples of the negative electrode active material include at least one type selected from the group comprising natural graphite, artificial graphite, hard carbon (non-graphitizable carbon) or soft carbon (graphitizable carbon), Si, SiOx (0 < x < 2), Si-based alloys, Sn, SnOx (0 < x < 2), Li, Li-based alloys, and Li₄Ti₅O₁₂. Examples of artificial graphite include highly oriented graphite and mesocarbon microbeads. The negative electrode active material is preferably artificial graphite.

It will be noted that the solid electrolyte is not particularly limited and conventionally known materials can be used as appropriate, and examples include sulfide-based solid electrolytes, oxide-based solid electrolytes, and polymer-based solid electrolytes. When a sulfide-based solid electrolyte is used as the solid electrolyte, gas caused by the sulfide-based solid electrolyte reacting with water tends to occur. It will be noted that a liquid-based electrolyte may be used instead of the solid electrolyte. The electrolyte is preferably a solid electrolyte is preferred because it allows a higher cell restraining force to be set compared with a liquid electrolyte.

A positive electrode current collector tab 32 and a negative electrode current collector tab 34 are provided on the upper end portion of the electrode body 30. The positive electrode current collector configuring the electrode body 30 is joined in a bundled state to the positive electrode current collector tab 32. The positive electrode current collector tab 32 is joined to a positive electrode current collector terminal 36 provided on the undersurface of the lid 28. That is, the positive electrode current collector tab 32 interconnects the electrode body 30 and the positive electrode current collector terminal 36.

The negative electrode current collector configuring the electrode body 30 is joined in a bundled state to the negative electrode current collector tab 34. The negative electrode current collector tab 34 is joined to a negative electrode current collector terminal 38 provided on the undersurface of the lid 28. That is, the negative electrode current collector tab 34 interconnects the electrode body 30 and the negative electrode current collector terminal 38.

One external terminal 24 is connected to the positive electrode current collector terminal 36, and the other external terminal 24 is connected to the negative electrode current collector terminal 38.

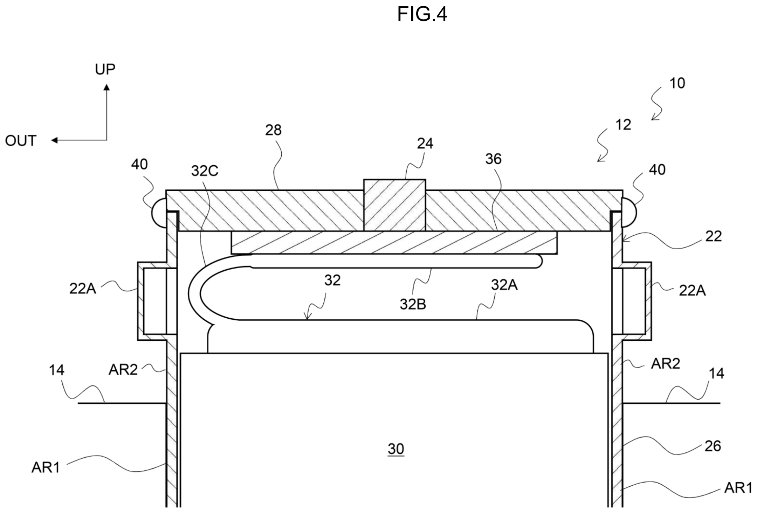

FIG. 4 is an enlarged cross-sectional view showing a cross section along line 4-4 of FIG. 3. As shown in FIG. 4, the positive electrode current collector tab 32 is configured to include an electrode body-side connector portion 32A connected to the electrode body 30, a terminal-side connector portion 32B connected to the positive electrode current collector terminal 36, and a curved portion 32C that interconnects the electrode body-side connector portion 32A and the terminal-side connector portion 32B.

The curved portion 32C curves so as to bulge toward one side in the width direction as viewed in the vehicle fore-aft direction (orthogonal to the widthwise stacking direction). For this reason, the space inside the upper end portion of the battery cell 12 is a space in which the curved portion 32C is disposed on one width direction side and in which the other width direction side is relatively wide.

Furthermore, the electrode body 30 housed in the case body 26 extends upward beyond the plate-like members 14. Moreover, although the drawings do not show this, the electrode body 30 extends downward beyond the plate-like members 14. For this reason, the plate-like members 14 are disposed in positions in which they entirely overlap the electrode body 30 as viewed from the stacking direction.

The raised portions 22A serving as reinforcement portions are formed by, for example, stamping parts of the case body 26, and the maximum projection amount of the raised portions 22A is smaller than the thickness of the plate-like members 14. More specifically, the maximum projection amount of the raised portions 22A is smaller than half the thickness of the plate-like members 14. For this reason, the raised portions 22A are configured to not interfere with the raised portions 22A provided on adjacent battery cells 12. The maximum projection amount is the projection amount in a position where the projection amount (height) of the raised portions 22A from the surfaces forming the non-confined regions AR2 reaches a maximum.

Furthermore, whereas the welded portion 40 at which the case body 26 and the lid 28 are welded together extends in the front and rear direction and the width direction, the raised portions 22A extend in the up and down direction intersecting the welded portions 40. In this embodiment, as an example, the raised portions 22A extend in a direction substantially orthogonal to the welded portion 40.

### (Operation)

Next, the action of the battery module 10 pertaining to this embodiment will be described.

In the battery module 10 pertaining to this embodiment, as shown in FIG. 1, the plurality of battery cells 12 are stacked in one direction, and the plate-like members 14 are disposed adjacent to the battery cells 12 on at least one side of each of the battery cells 12 in the stacking direction thereof. The plate-like members 14 are confined together with the battery cells 12. Furthermore, as shown in FIG. 2 to FIG. 4, each of the battery cells 12 includes the casing 22 that houses the electrode body 30, and the surface on the plate-like member 14 side of the casing 22 is configured to include the confined region AR1, in which the surface contacts the plate-like member 14, and the non-confined regions AR2, in which the surface does not contact the plate-like member 14.

Here, as shown in FIG. 4, the raised portions 22A serving as reinforcement portions are provided in the non-confined regions AR2. In this way, the non-confined regions AR2 are reinforced by the raised portions 22A, so the non-confined regions AR2 can be inhibited from expanding when the internal pressure of the battery cell 12 rises.

Specifically, when the internal pressure of the battery cell 12 rises due to differences in elevation and gas generated inside, the casing 22 tries to expand, but the battery cell 12 is unable to expand because the confined regions AR1 are confined by the plate-like members 14. For this reason, the casing 22 tries to expand outward in the non-confined regions AR2. In this state also, the casing 22 can be inhibited from greatly expanding because the non-confined regions AR2 are reinforced by the raised portions 22A.

Particularly in this embodiment, the reinforcement portions are configured by the plural raised portions 22A, so the non-confined regions can be reinforced by a simple structure. Furthermore, the raised portions 22A project outward of the casing 22, so the raised portions 22A can be inhibited from interfering with parts inside the battery cell 12.

Moreover, the projection amount of the raised portions 22A is smaller than the thickness of the plate-like members 14, so the raised portions 22A can be inhibited from interfering with adjacent battery cells 12.

Moreover still, in this embodiment, the raised portions 22A extend in a direction intersecting the welded portion 40 at which the case body 26 and the lid 28 are welded together, so the welded portion 40, which is relatively structurally weak, can be effectively inhibited from expanding. Specifically, when the case body 26 expands outward, the load may concentrate in the welded portion 40 in the end portion of the case body 26. By contrast, by extending the raised portions 22A in a direction intersecting the welded portion 40 as in this embodiment, expansion in which the load concentrates in the welded portion 40 can be inhibited, and the joint state between the case body 26 and the lid 28 can be well maintained.

Furthermore, in this embodiment, as shown in FIG. 2, the raised portions 22A are provided in center portions of the casing 22 in the front and rear direction orthogonal to the width direction that is the stacking direction, so the portions that tend to expand the most can be reinforced, and expansion of the casing 22 can be effectively inhibited.

Moreover, because the non-confined regions AR2 are provided on both sides of the confined region AR1 and the raised portions 22A are provided in the non-confined regions AR2 located on both sides as in this embodiment, expansion of the non-confined regions AR2 located on both sides can be inhibited.

Moreover still, in this embodiment, the raised portions 22A are provided in corresponding positions in the one non-confined region AR2 and the other non-confined region AR2, so the one non-confined region AR2 and the other non-confined region AR2 can be evenly reinforced.

Furthermore, in this embodiment, the plate-like members 14 are disposed in positions in which they entirely overlap the electrode body 30, so the entireties of the plate-like members 14 receive a reaction force from the electrode body 30. For this reason, the casing 22 can be inhibited from being deformed by the confining force input from the plate-like members 14.

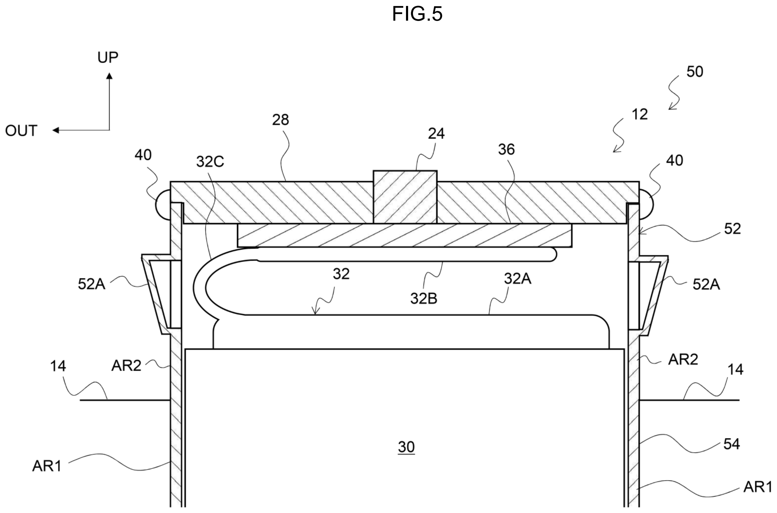

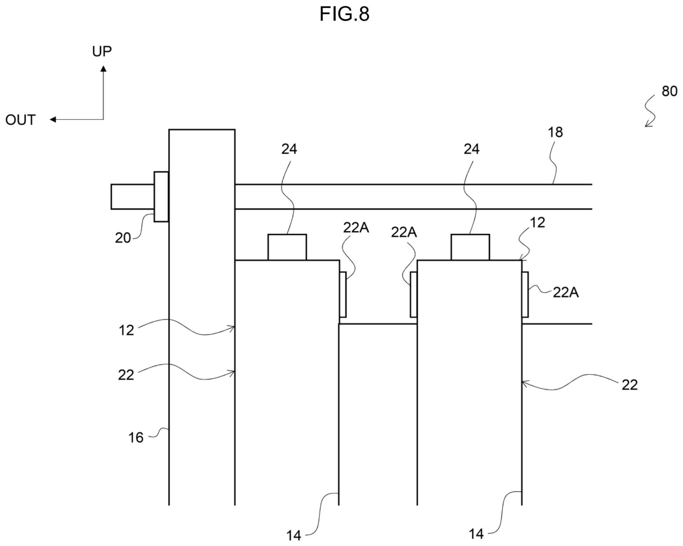

It will be noted that the battery module of this disclosure is not limited to the structure of this embodiment and may employ structures described in a first example modification shown in FIG. 5 to a fourth example modification shown in FIG. 8.

### (First Example Modification)

FIG. 5 is an enlarged cross-sectional view corresponding to FIG. 4 and shows main parts of a battery cell in a first example modification. As shown in FIG. 5, in this example modification, the shape of the raised portions 22A is different.

Specifically, a casing 52 configuring a battery module 50 pertaining to this example modification is configured to include a case body 54 having an open portion and a lid 28 that closes off the open portion of the case body 54. The case body 54 is, as an example, formed in the shape of a bottomed rectangular tube and opens upward.

The lid 28 is joined to the case body 54 by welding, and a welded portion 40 is provided at the boundary between the case body 54 and the lid 28. Furthermore, the two external terminals 24 are inserted through the lid 28.

Raised portions 52A serving as reinforcement portions are provided in the case body 54. The raised portions 52A are formed by, for example, stamping parts of the case body 54, and the maximum projection amount of the raised portions 52A is smaller than the thickness of the plate-like members 14.

Furthermore, the raised portions 52A of this example modification project outward from the non-confined regions AR2 of the casing 52, and the raised portions 52A formed on one width direction side of the case body 54 and the raised portions 52A formed on the other width direction side have substantially identical shapes.

Here, in this example modification, the projection amount of the raised portions 52A increases the closer the raised portions 52A become to the welded portion 40. Specifically, the raised portions 52A have different projection amounts in the up and down direction and are formed in substantially tapered shapes so that the projection amount increases in a direction from below to above.

Furthermore, the welded portion 40 at which the case body 54 and the lid 28 are welded together is positioned on the upper end portion of the case body 54, so the projection amount of the raised portions 52A increases the closer the raised portions 52A become to the welded portion 40.

By increasing the projection amount of the raised portions 52A the closer the raised portions 52A become to the welded portion 40 as in this example modification, expansion in the neighborhood of the welded portion 40 can be effectively inhibited. Furthermore, by relatively decreasing the projection amount of the raised portions 52A in positions away from the welded portion 40, interference with peripheral parts can be inhibited.

### (Second Example Modification)

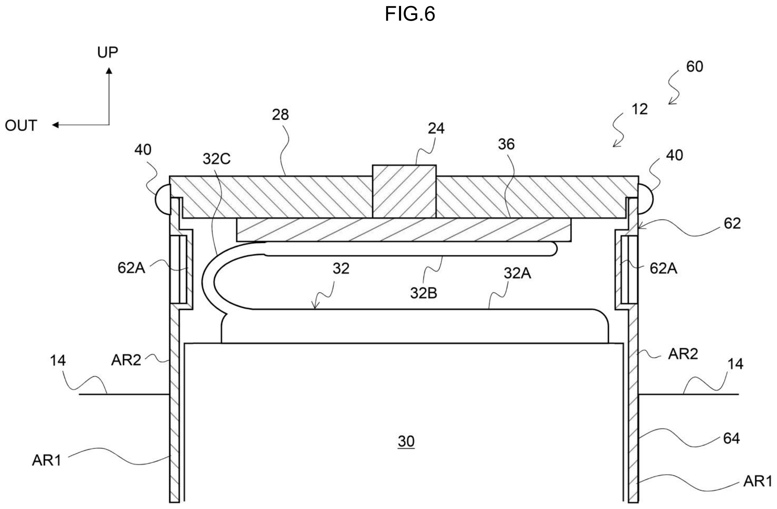

FIG. 6 is an enlarged cross-sectional view corresponding to FIG. 4 and shows main parts of a battery cell in a second example modification. As shown in FIG. 6, in this example modification, recessed portions are formed instead of raised portions.

Specifically, a casing 62 for a battery cell configuring a battery module 60 pertaining to this example modification is configured to include a case body 64 having an open portion and a lid 28 that closes off the open portion of the case body 64. The case body 64 is, as an example, formed in the shape of a bottomed rectangular tube and opens upward.

The lid 28 is joined to the case body 64 by welding, and a welded portion 40 is provided at the boundary between the case body 64 and the lid 28. Furthermore, the two external terminals 24 are inserted through the lid 28.

Recessed portions 62A serving as reinforcement portions are provided in the case body 64. The recessed portions 62A are formed by, for example, stamping parts of the case body 64, and the maximum projection amount of the recessed portions 62A inward in the width direction is smaller than the thickness of the plate-like members 14.

Furthermore, the recessed portions 62A have shapes that are recessed inward of the case body 64 configuring the casing 62, and the recessed portions 62A are provided in positions in which they do not overlap the electrode body 30 as viewed from the stacking direction.

In this example modification, the recessed portions 62A are recessed inward of the casing 62, so the recessed portions 62A can be inhibited from interfering with parts outside the battery cell 12. Furthermore, the recessed portions 62A are provided in positions in which they do not overlap the electrode body 30 as viewed from the stacking direction, so dead space in which the electrode body 30 is not present can be utilized to reinforce the non-confined regions AR2.

It will be noted that the number and shape of the recessed portions 62A are not particularly limited. For example, three recessed portions 62A may be provided in each of the non-confined regions AR2 as in the embodiment.

### (Third Example Modification)

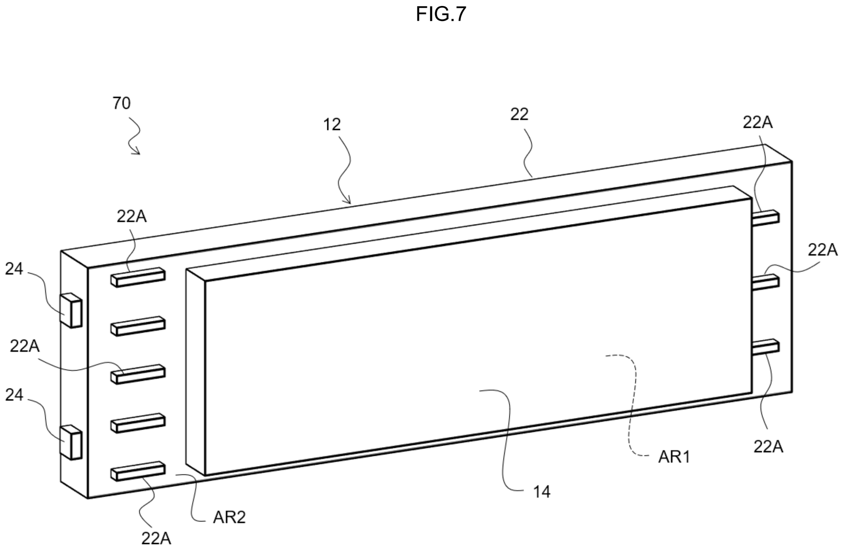

FIG. 7 is a perspective view corresponding to FIG. 2 and shows main parts of a battery module 70 pertaining to a third example modification. As shown in FIG. 7, in the battery module 70 of this example modification, the number of the raised portions 22A serving as reinforcement portions provided in the battery cell 12 is different.

Specifically, five raised portions 22A are provided in the non-confined region AR2 located on the side close to the external terminals 24 (the lid). By contrast, as in the embodiment, three raised portions 22A are provided in the non-confined region AR2 located on the side far from the external terminals 24.

By increasing the number of the raised portions 22A in the non-confined region AR2 located close to the lid as in this example modification, the non-confined region AR2 located close to the lid, which is weaker, can be effectively reinforced.

It will be noted that although in this example modification the same number of raised portions 22A are also provided in the non-confined regions AR2 of the surface on the opposite side of the case body 26, the disclosure is not limited to this. For example, different numbers of raised portions 22A may be provided on one surface and the other surface, with five raised portions 22A being provided on one width direction side and three raised portions 22A being provided on the other width direction side.

### (Fourth Example Modification)

FIG. 8 is an enlarged front view showing main parts of a battery module pertaining to a fourth example modification. As shown in FIG. 8, in a battery module 80 of this example modification, the number of the raised portions 22A differs by battery cell 12.

Specifically, the battery cell 12 adjacent to the confining member 16 has the plate-like member 14 disposed on just one surface. Furthermore, since the other surface of the battery cell 12 is entirely in contact with the confining member 16, the battery cell 12 adjacent to the confining member 16 has the raised portions 22A provided just on the one surface of the casing 22.

Here, the entire surface of the battery cell 12 contacting the confining member 16 has confining force applied thereto from the confining member 16, so the surface on the confining member 16 side does not expand even when the internal pressure of the battery cell 12 rises.

At the same time, since the raised portions 22A are provided on the other surface of the casing 22 of the battery cell 12, the other surface is reinforced by the raised portions 22A, thus inhibiting expansion.

Furthermore, the battery cell 12 that is not adjacent to the confining member 16 is provided with the raised portions 22A on both the one width direction surface and the other width direction surface of the casing 22. Here, although FIG. 8 does not show this, the number of the raised portions 22A is greater on the surface located closer to the confining member 16 than on the surface located farther away from the confining member 16. Specifically, among the two battery cells 12 shown in FIG. 8, the battery cell 12 that is not adjacent to the confining member 16 has five raised portions 22A provided in the front and rear direction on the surface of the casing 22 located closer to the confining member 16. Furthermore, that battery cell 12 has three raised portions 22A provided in the front and rear direction on the surface of the casing 22 located farther away from the confining member 16.

It will be noted that in this example modification, seven battery cells 12 are disposed in the width direction as shown in FIG. 1. For this reason, the battery cell 12 positioned in the center in the width direction is provided with three raised portions 22A each on both surfaces of the casing 22, and the other battery cells 12 are each provided with five raised portions 22A on the surfaces located closer to the confining members 16.

In this example modification, by providing the raised portions 22A on just the surfaces of the casings 22 adjacent to the plate-like members 14, unnecessary raised portions 22A can be dispensed with. Furthermore, the surfaces of the casings 22 located closer to the confining members 16 receive a greater confining force, so by increasing the number of the raised portions 22A on those surfaces, the casings 22 can be appropriately reinforced in accordance with loads input to the casings 22. That is, the surfaces located closer to the confining members 16 and the surfaces located farther away from the confining members 16 can be reinforced to the same extent with respect to external forces.

Although battery modules pertaining to an embodiment and example modifications have been described above, the disclosure is not limited to this and can naturally be implemented in a variety of ways without departing from the spirit of the disclosure. For example, although in the above embodiment the plate-like members 14 are each formed substantially in the shape of a rectangular plate as shown in FIG. 2, the plate-like members 14 are not limited to this and may have another shape.

Furthermore, although in the above embodiment the plate-like members 14 are disposed so as to entirely overlap the battery cells 12 as viewed from the stacking direction, the plate-like members 14 are not limited to this. For example, the plate-like members 14 may be disposed in positions in which parts of the plate-like members 14 do not overlap the battery cells 12 as viewed from the stacking direction. Specifically, the plate-like members 14 may be disposed so that the upper ends of the plate-like members 14 are positioned higher than the upper ends of the battery cells 12.

Furthermore, the plate-like members 14 may each be divided into a plural number of pieces and may have holes or depressions formed in their surfaces.

Moreover, although in the above embodiment the reinforcement portions are configured by at least one of raised portions and recessed portions, the reinforcement portions are not limited to this and may be configured by other structures. For example, thick-walled portions that are thicker than the confined regions may be formed in the non-confined regions of the casings that do not contact the plate-like members, and these thick-walled portions may serve as the reinforcement portions.

Moreover still, although in the above embodiment the raised portions and the recessed portions have structures extending in the up and down direction of the battery cells, they are not limited to this. For example, the raised portions and the recessed portions may extend in the front and rear direction of the battery cells. Furthermore, the raised portions and the recessed portions may be formed in substantial cross shapes or substantial elliptical shapes, for example.

Furthermore, although in the above embodiment the projection amount of the raised portions is set equal to or less than half the thickness of the plate-like members, the projection amount is not limited this. For example, even when the projection amount of the raised portions is formed equal to or greater than half the thickness of the plate-like members, the raised portions may be formed in different positions between adjacent battery cells so that the raised portions do not interfere with each other. Furthermore, raised portions may be provided in one of two adjacent battery cells and recessed portions may be provided in the other, so that they do not interfere with each other.

The following supplementary items are disclosed in relation to the above embodiment.

### (Supplementary Item 1)

A battery module comprising:
a plurality of battery cells that are stacked in one direction, each of the battery cells including a casing that houses an electrode body;
plate-like members that are disposed adjacent to at least one side of each of the battery cells in a stacking direction thereof and are confined together with the battery cells,
wherein
the surface on the plate-like member side of the casing is configured to include a confined region, in which the surface contacts the plate-like member, and non-confined regions, in which the surface does not contact the plate-like member, and
reinforcement portions are provided in the non-confined regions.

### (Supplementary Item 2)

The battery module of supplementary item 1, wherein the reinforcement portions are configured to include at least one of raised portions and recessed portions provided in the non-confined regions of the casing.

### (Supplementary Item 3)

The battery module of supplementary item 2, wherein
the reinforcement portions are configured to include recessed portions that are recessed inward of the casing, and
the recessed portions are provided in positions in which they do not overlap the electrode body as viewed from the stacking direction.

### (Supplementary Item 4)

The battery module of supplementary item 2, wherein
the reinforcement portions are configured to include raised portions that project outward of the casing, and
the maximum projection amount of the raised portions is smaller than the thickness of the plate-like member.

### (Supplementary Item 5)

The battery module of any one of supplementary item 2 to supplementary item 4, wherein
the casing is configured to include a case body having an open portion and a lid that is welded to the case body and closes off the open portion of the case body, and
the raised portions or the recessed portions extend in a direction intersecting a welded portion at which the case body and the lid are welded together.

### (Supplementary Item 6)

The battery module of supplementary item 5, wherein the projection amount of the raised portions or the recessed portions increases the closer the raised portions or the recessed portions become to the welded portions.

### (Supplementary Item 7)

The battery module of any one of supplementary item 1 to supplementary item 6, wherein the reinforcement portions are provided in a center portion of the casing in a direction orthogonal to the stacking direction.

### (Supplementary Item 8)

The battery module of any one of supplementary item 1 to supplementary item 7, wherein
the non-confined regions are provided on both sides of the confined region, and
the reinforcement portions are provided in the non-confined regions located on both sides.

### (Supplementary Item 9)

The battery module of supplementary item 8, wherein the reinforcement portions are provided in corresponding positions in the one non-confined region and the other non-confined region.

### (Supplementary Item 10)

The battery module of supplementary item 8, wherein
the casing is configured to include a case body having an open portion and a lid that is welded to the case body and closes off the open portion of the case body, and
the reinforcement portions are provided in a greater number in the non-confined region located close to the lid.

### (Supplementary Item 11)

The battery module of any one of supplementary item 1 to supplementary item 10, wherein
the plate-like members are disposed adjacent to just one surface of each of the casings, and
the reinforcement portions are provided on just the surfaces adjacent to the plate-like members.

### (Supplementary Item 12)

The battery module of any one of supplementary item 1 to supplementary item 11, wherein the plate-like members are disposed in positions in which they entirely overlap the electrode bodies as viewed from the stacking direction.

### (Supplementary Item 13)

The battery module of any one of supplementary item 1 to supplementary item 12, wherein
confining members that apply a confining force to the battery cells and the plate-like members are provided on both sides of a stack in which the plurality of battery cells are stacked, and
the number of the reinforcement portions is greater on the surfaces of the casings located closer to the confining members than on the surfaces of the casings located farther away from the confining members.

## Claims

1. A battery module (10), comprising:
a plurality of battery cells (12) that are stacked in one direction, each of the battery cells (12) including a casing (22) that houses an electrode body (30); and
plate-like members (14) that are disposed adjacent to at least one side of each of the battery cells (12) in a stacking direction of the battery cells (12), and that are confined together with the battery cells (12),
wherein:
a surface on a plate-like member (14) side of each casing (22) includes a confined region (AR1), in which the surface contacts the plate-like members (14), and non-confined regions (AR2), in which the surface does not contact the plate-like members (14), and reinforcement portions (22A, 62A) are provided in the non-confined regions (AR2).

2. The battery module (10) of claim 1, wherein the reinforcement portions include at least one of raised portions (22A) and recessed portions (62A) provided in the non-confined regions of the casing (22).

3. The battery module (10) of claim 2, wherein:
the reinforcement portions include recessed portions (62A) that are recessed toward an inner side of the casing (22, and
the recessed portions (62A) are provided at positions at which the recessed portions (62A) do not overlap with the electrode body (30) as viewed from the stacking direction.

4. The battery module (10) of claim 2, wherein:
the reinforcement portions include raised portions (22A) that project outward from the casing (22), and
a maximum projection amount of the raised portions (22A) is less than a thickness of each of the plate-like members (14).

5. The battery module (10) of claim 2, wherein:
the casing (22) includes a case body (26) having an open portion, and a lid (28) that is welded to the case body (26) and that closes off the open portion of the case body (26), and
the raised portions (22A) or the recessed portions (62A) extend in a direction intersecting a welded portion (40) at which the case body (26) and the lid (28) are welded together.

6. The battery module (10) of claim 5, wherein a projection amount of the raised portions (22A) or the recessed portions (62A) increases the closer the raised portions (22A) or the recessed portions (62A) become to the welded portion (40).

7. The battery module (10) of claim 1, wherein the reinforcement portions (22A, 62A) are provided at a center portion of the casing (22) in a direction orthogonal to the stacking direction.

8. The battery module (10) of claim 1, wherein:
the non-confined regions (AR2) are provided at both sides of the confined region (AR1), and
the reinforcement portions are provided at the non-confined regions (AR2) located at both sides.

9. The battery module (10) of claim 8, wherein the reinforcement portions are provided at corresponding positions in one non-confined region (AR2) and another non-confined region (AR2).

10. The battery module (10) of claim 8, wherein:
the casing (22) includes a case body (26) having an open portion, and a lid (28) that is welded to the case body (26) and that closes off the open portion of the case body (26), and
the reinforcement portions are provided in a greater number in the non-confined region (AR2) located close to the lid (28).

11. The battery module (10) of claim 1, wherein:
the plate-like members (14) are disposed adjacent to only one surface of each casing (22), and
the reinforcement portions are provided at only surfaces adjacent to the plate-like members (14).

12. The battery module (10) of claim 1, wherein the plate-like members (14) are disposed at positions at which the plate-like members (14) entirely overlap with the electrode bodies (30) as viewed from the stacking direction.

13. The battery module (10) of claim 1, wherein:
confining members (16) that apply a confining force to the battery cells (12) and the plate-like members (14) are provided at both sides of a stack in which the plurality of battery cells (12) are stacked, and
a number of the reinforcement portions is greater at surfaces of casings (12) located closer to the confining members (16) than at surfaces of casings (22) located farther away from the confining members (16).

14. A battery module (10), comprising:
a plurality of battery cells (12) that are stacked in one direction, each of the battery cells (12) including a casing (22), which houses an electrode body (30), and a solid electrolyte as an electrolyte; and
plate-like members (14) that are disposed adjacent to at least one side of each of the battery cells (12) in a stacking direction of the battery cells (12), and that are confined together with the battery cells (12),
wherein:
a surface on a plate-like member (14) side of each casing (22) includes a confined region (AR1), in which the surface contacts the plate-like members (14), and non-confined regions (AR2), in which the surface does not contact the plate-like members (14), and
reinforcement portions (22A, 62A) are provided in the non-confined regions (AR2).
